Europäisches Patentamt

European Patent Office

Office européen des brevets

(11) Publication number: **0 375 638**
A2

## EUROPEAN PATENT APPLICATION

(21) Application number: 89830563.6

(51) Int. Cl.⁵: **E05B 49/00, G07G 1/12**

(22) Date of filing: 21.12.89

(30) Priority: 23.12.88 IT 498388 U

(43) Date of publication of application:
27.06.90 Bulletin 90/26

(84) Designated Contracting States:
DE FR GB NL

(71) Applicant: VIRO INNOCENTI S.p.A.
Via Garibaldi 4
I-40069 Zola Predosa(IT)

(72) Inventor: Longo, Giovanni
Via Nemorense, 81
I-00199 Roma(IT)

(74) Representative: Trentini, Ermanno
Studio Brevetti Internazionali Ing. E. Trentini
Via U. Lenzi, 2
I-40122 Bologna(IT)

(54) **Programmable combination electronic key and link-up receiver.**

(57) Programmable combination electronic key and link-up receiver comprising a portable keyboard combination selector (T), a clear key (C), a display (V), a power supply system (AP), a timed memory (MP), an input combination memory (MI) capable of generating, storing and transferring a secret code to an appropriate receiving device, featuring a decoder circuit (CD), a signal emission device (SE) and an interface (I) for link-up between the portable combination selector and the equipment to be controlled, hosting the receiver, which can therefore already be installed, as is the case with pre-existing automatic bill dispensers or P.O.S. terminals.

Fig.2

Fig.1.

EP 0 375 638 A2

## PROGRAMMABLE COMBINATION ELECTRONIC KEY AND LINK-UP RECEIVER.

This invention relates to a portable combination coder capable of generating, storing and transferring a secret code on a specially designed receiver, as disclosed and claimed in the industrial Patent No. 3567 A/88 filed on 16/08/88 by the applicant VIRO INNOCENTI S.P.A., operating exclusively in the current enbodiment as a link-up device between the coder itself and the external unit to be controlled.

The special characteristics of the coder allow for extreme simplification of design features of the receiver, which can thus be mounted onto any pre-existing equipement such as automatic bill dispensers or POS terminals, even those already installed, by means of a simple interface.

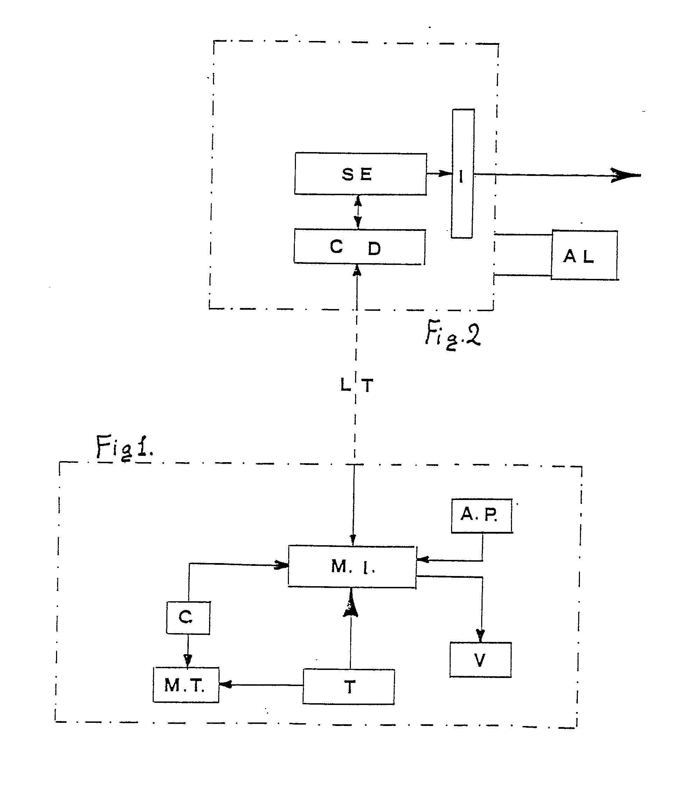

Notwithstanding the operating functions previously claimed for the electronic key reported in figure 1, figure 2 illustrates the link-up receiver. The same features a single guide- fitted insertion hole for proper introduction of the electronic key, an electronic signal emission (SE) device, an electronic decoder circuit (CD) designed for reading the key code and an interface (I) between the link-up receiver and the host equipment so as to allow standard mode communication between the two (e.g. RS232 interface).

The functions of the receiver are as follows: first, it receives the signal from the key which can take the form of an optical pen; second, it interprets and decodes the signal received from the pen; third, it transmits the decoded signal to the external host equipment via an interface which makes it compatible with said equipment.

Furthermore, the receiver is also capable of transmitting a return signal, which can be of an optical kind, to the key so as to clear the code entered on the key by means of the portable coder.

In practice, details of construction, dimensions and materials, the shape and other details of the device can be varied without departing from the scope of this industrial invention. In fact the device, as conceived, can undergo numerous modifications and variations, all of which however keep the device within the scope of the invention as originally conceived. Additionally, all the component parts are replaceable by other technically equivalent component parts.

## Claims

1. A programmable combination electronic key and link-up receiver comprising a guide-fitting insertion hole for the electronic key notwithstanding other devices, characterized by an incoming signal decoder circuit (CD), an electronic signal emitting device (SE) which communicates, by means of the interface, the data from the coder to the external host equipment.

2. A programmable combination electronic key and link-up receiver as claimed in Claim 1 wherein the electronic signal device (SE) is capable of generating a return signal which clears the code entered on the coder.

3. A programmable combination electronic key and link-up receiver as claimed in Claims 1 and 2 above, characterized in that its installation does not require any particular modifications of the existing external host equipment to which it is linked by means of a standard interface.

4. A programmable combination electronic key and link-up receiver as claimed in Claims 1, 2 and 3 above, which is designed and constructed as disclosed herein and shown in the enclosed figures to perform the specified functions.

Fig.2

Fig.1.